# EUROPEAN PATENT APPLICATION

(11) **EP 3 552 990 A1**
(43) Date of publication of application: **16.10.2019**
(21) Application number: 17879097.8
(22) Date of filing: 21.11.2017
(51) Int. Cl.: B65D 85/72, B65D 23/02

(54) **PACKAGE ACCOMMODATING FLUIDS**

(30) Priority: 07.12.2016 JP 2016237820
(71) Applicant: Toyo Seikan Group Holdings, Ltd., Shinagawa-ku Tokyo 141-8627 (JP); Toyo Seikan Co., Ltd., Tokyo 141-8640 (JP)
(72) Inventor: SEITO, Shinya, Yokohama-shi Kanagawa 240-0062 (JP); OKAMOTO, Kota, Yokohama-shi Kanagawa 240-0062 (JP); AKUTSU, Yosuke, Yokohama-shi Kanagawa 230-0001 (JP); NYUU, Keisuke, Yokohama-shi Kanagawa 230-0001 (JP); MIYAZAKI, Tomoyuki, Yokohama-shi Kanagawa 230-0001 (JP)
(74) Representative: J A Kemp
(86) International application number: PCT/JP2017/041873
(87) International publication number: WO 2018/105390

(57) **Abstract**

A package including a container body containing a fluid with leaving a head space, wherein a container body 1 has an inner surface coated with a lubricating liquid 30 immiscible with a fluid 3, and the lubricating liquid 30 is present as a coating layer interposed between the inner surface and the fluid 3, the lubricating liquid 30 forms a liquid pool at a periphery of an upper end face of the fluid 3 contained in the container body 1 in a state of being held upright, and a contact angle of the lubricating liquid 30 to the inner surface is smaller than the contact angle of the fluid 3 to the inner surface.

## Description

### Technical Field:

The present invention relates to a package comprising a container body containing a fluid. More specifically, the present invention relates to a package having an inner surface on which a coating layer of a lubricating liquid for improving slipping property to the fluid is formed.

### Background Art:

Since plastic containers can be formed easily and produced at a low cost, they are used widely in various fields. In particular, a bottle-shaped olefinic resin container that has a container wall with an inner surface formed of an olefinic resin such as a low-density polyethylene or the like and that is formed by direct blow forming is used preferably for a container to contain a viscous slurry or paste-like content such as ketchup, from the viewpoint of easy squeezing of the content.

A bottle containing a viscous content is often stored in an inverted state so that the content may be rapidly discharged or the content may be used up without remaining inside the bottle. For this reason, it is desirable for the bottle to allow the viscous content to rapidly fall off without adhering or remaining onto the inner wall surface of the bottle when the bottle is placed upside-down.

As a bottle to satisfy such requirements, for instance, Patent document 1 proposes a container including hydrophobic oxide fine particles adhering to the inner surface of the bottle, where the fine particles has a primary particle diameter in a range of 3 to 100 nm.

Patent document 2 proposes a lid having a water-repellent film formed on the surface thereof. The water-repellent film has a structure which includes a resin film formed of resin particles having an average particle diameter in a range of 1 µm to 20 µm, and oxide fine particles dispersed and adhered to the surface of the resin film, with the oxide fine particles having an average particle diameter in a range of 5 nm to 100 nm.

Each of the aforementioned techniques relates to formation of fine ruggedness on a surface to be brought into contact with the content in order to exhibit water-repellency (hydrophobicity) by a finely rugged surface. This effect is imparted not only by the hydrophobicity of the materials forming the rugged surface but an air layer formed in gaps on the rugged surface. This air layer is more hydrophobic than the materials forming the container, thereby improving the non-adhesiveness to an aqueous content.

The thus finely rugged surface may have an enhanced non-adhesiveness to the aqueous content. However, in a case where the content and the finely rugged surface are in a constant contact with each other, condensation of moisture is very likely to occur at dents on the finely rugged surface. As a result, the dents are filled with water of condensation to cause deterioration in the slipping property. In other words, there has been demand for further improvement of the slipping property.

Patent document 3 proposes a container having an inner surface with ruggedness where a liquid is held stably by the ruggedness. The container utilizes a capillary phenomenon of the ruggedness to stably hold a layer of the liquid on the container inner surface. With this liquid layer, the slipping property to the content can be improved.

However, the technique of this document involves a problem in the process of forming ruggedness on the inner surface of the container. Since the ruggedness is to hold the liquid by a capillary phenomenon, the pitch is extremely small, and the ruggedness have a height considerably greater than the pitch, thereby to make the capillary force predominant and to prevent the liquid from falling due to the gravity. The ruggedness may be formed in a post-process after formation of the container body, for instance, by blowing a liquid in which fine particles for forming ruggedness is dispersed, or by etching. As a result, for a case of formation of a bottle or the like, processes for forming ruggedness after formation of the container will be extremely complicated to raise considerably the production cost and the like.

The present inventors proposes in Patent document 4 a container to solve the aforementioned problems. The container also has ruggedness formed on the inner surface, and a liquid layer of a lubricating liquid is formed on the inner surface with ruggedness . This technique maybe similar to the technique of the aforementioned Patent document 3 in utilizing the liquid layer for improving slipping property to a content in the container.

In the Patent document 4, the liquid layer has a partially protruding area on its surface. Specifically, the ruggedness of the container inner surface is reflected on the surface of the liquid layer, so that protrusions are formed on the surface of the liquid layer to correspond to the ruggedness on the inner surface of the container. This is one of the essential features of this technique. That is, the thus formed liquid layer is a thin layer that simply wets the inner surface of the container. When the content flows on the area where the liquid layer is formed, the content may flow while being in contact with the liquid layer (the locally protruding portion) and the air layer present among the locally protruded liquid layer. This may provide slipping property further preferable when compared with a case of simply allowing the content to flow while being in contact with the liquid layer in the container.

The technique according to Patent document 4 can improve remarkably the slipping property to the content in the container. Moreover, the ruggedness on the inner surface of the container can be formed not by a post-process after formation of the container but by mixing fine particles used as a surface roughening agent with a resin for forming the inner surface of the container and forming them into the container. In other words, the ruggedness is not limited in particular as long as they can hold a liquid to wet the inner surface of the container. Since the ruggedness is not required to exhibit a capillary force to hold therein the liquid, the pitch may be greater than the height of the ruggedness, for instance. The ruggedness can be formed by mixing the resin to form the inner surface of the container with a certain amount of fine particles for surface roughening and subjecting the resulting mixture to forming. This process does not require any complicated post-process after formation of the container, and thus, it provides a remarkable advantage from the viewpoint of productivity, production cost and the like.

However, even the technique of Patent document 4 by the present inventors still involves problems to be solved.

Since the technique of Patent document 4 relates to an extremely thin liquid layer of the lubricating liquid on the inner surface of the container, the technique of spraying the lubricating liquid on the container inner surface is not suitable to form a liquid layer. Therefore, the liquid layer is formed by an internal addition process of forming the container by mixing a lubricating liquid with a resin to form the container inner surface. That is, the liquid layer is formed by bleeding of the lubricating liquid from the resin layer that constitutes the container inner surface.

The internal addition process is considered as advantageous for forming a thin liquid layer, but it has difficulty in forming a layer of a uniform thickness on the entire inner surface. As a result, the liquid layer may be missing at some parts of the inner surface. In some cases, the liquid layer may be extremely thick at some parts since the ruggedness on the inner surface has insufficient power to hold the liquid. This may easily result in variations in slipping property to the content, and thus, further improvement is needed.

It is possible to form the liquid layer by spraying the lubricating liquid on the container inner surface . In that case, however, the amount of liquid for forming the liquid layer may be excessive. As a result, after spraying, a step of inverting the container to discharge excessive lubricating liquid is required before filling the container with contents. In conclusion, spraying cannot be employed from the viewpoint of avoiding profligate use of the lubricating liquid, useless process steps, and the like.

Further, the present inventors have proposed a package in WO2017/056820. This package comprises a container body whose inner surface is entirely rugged, and the rugged surface is coated with a lubricating liquid. The package of the present invention is characterized in that the lubricating liquid is held on the rugged surface and a liquid pool of the lubricating liquid is formed at the periphery of the upper end face of a fluid contained in the container body held in an upright state. The package can exhibit a stable slipping property to the fluid by the lubricating liquid, thereby enabling rapid discharge of the fluid. Furthermore, the package can be produced easily without increase in the production cost.

The present inventors further studied the package to reach a quite surprising result. Specifically, when the properties like wettability of the fluid to be contained in the container body and the properties like wettability of the lubricating liquid coating the inner surface of the container body are in a predetermined relationship, it is possible to remarkably improve the discharging property to the fluid from the container body without roughening the inner surface of the container body.

### Prior Art Documents:

### Patent Documents:

Patent Document 1: JP-A-2010-254377
Patent Document 2: Japanese Patent No. 4878650
Patent Document 3: Japanese Translation of PCT International Application Publication No. JP-T-2015-510857
Patent Document 4: Japanese Patent No. 5673870

Outline of the Invention:

### Problems that the Invention is to Solve:

Therefore, an object of the present invention is to provide a package comprising a container body containing a fluid, where the container body has an inner surface coated with a lubricating liquid. The package can provide a favorable property in fluid discharge, and it can be produced easily without increase in the production cost.

### Means for Solving the Problems:

That is, the present invention provides a package comprising a container body containing a fluid with leaving a head space, wherein
the container body has an inner surface coated with a lubricating liquid immiscible with the fluid, and the lubricating liquid is present as a coating layer interposed between the inner surface and the fluid,
the lubricating liquid for forming the coating layer forms a liquid pool at a periphery of an upper end face of the fluid contained in the container body in a state of being held upright, and
a contact angle of the lubricating liquid to the inner surface is smaller than the contact angle of the fluid to the inner surface.

It is preferable in the package of the present invention that the fluid is a viscous substance having a viscosity of not less than 100 mPa•s at 25°C.

### Effects of the invention:

The first characteristic of the package of the present invention is that a liquid pool of the lubricating liquid is formed at the periphery of the upper end face of the fluid contained in the container body in an upright state.

In other words, the liquid pool of the lubricating liquid is formed at the upper end periphery of the fluid, and thus, at the time of tilting the container body to discharge the fluid, the fluid may be discharged keeping in contact with the lubricating liquid. In addition to that, the coating layer of the lubricating liquid is formed on the inner surface of the container body. As a result, inside the package of the present invention, the lubricating liquid in contact with the fluid moves with the fluid. After the container body is returned to its upright state, the lubricating liquid flows back with the fluid on the inner surface, so that the lubricating liquid is present inside the container body, keeping in contact with the fluid that is not discharged but remains in the container body.

In this manner, the package of the present invention can constantly exhibit a stable slipping property even after repeated discharge of the fluid (content).

The liquid pool of the lubricating liquid is formed as a result of fall of the lubricating liquid that coats the inner surface (flat smooth surface) in the head space area. This indicates that the layer of the lubricating liquid that coats the inner surface of the container body can be formed by spraying an excessive amount of lubricating liquid onto the inner surface of the container body. Namely, there is no necessity of employing any other processes to form ruggedness on the inner surface of the container, such as internally adding a surface roughening agent to the resin or performing a post-process. Instead, it is possible to form a coating layer of the lubricating liquid easily by spraying the lubricating liquid onto the inner surface of the container body. In this manner, a package that can exhibit stably its properties of the lubricating liquid in a quite simple manner without using any complicated and costly processes such as making the degree of ruggedness uniform.

The second characteristic of the present invention is that the contact angle of the lubricating liquid to the inner surface is smaller than the contact angle of the fluid to the inner surface.

Namely, in the present invention, the aforementioned liquid pool is formed and further, the fluid to be contained in the container body and the lubricating liquid that coats the inner surface of the container body are selected to satisfy the aforementioned relationship. Thereby, when the container body is tilted to discharge the fluid, the fluid may be peeled off rapidly from the inner surface in the upper area of the tilted container body. In other words, the peeling property of the inner surface of the container body to the fluid is enhanced, and thus, the inner surface can exhibit excellent discharging property in combination with the aforementioned slipping property.

The package of the present invention can improve stably the slipping property to the fluid by using any suitable lubricating liquid selected to satisfy the aforementioned relationship in accordance with the type of the fluid to be contained in the container body. Therefore, it can be used especially preferably for containing a viscous liquid, for instance a viscous substance having a viscosity of not less than 100 mPa•s at 25°C (e.g., ketchup, mayonnaise, and dressing).

### Brief Description of the Drawings:

[Fig. 1] : a set of schematic cross-sectional views, one of which showing principal parts of a package of the present invention, and the others showing the parts in a state of discharging a fluid (lower area (slippery surface)).
[Fig. 2] : a set of schematic cross-sectional views, one of which showing principal parts of a package of the present invention, and the others showing the parts in a state of discharging a fluid (upper area (peeling surface)).
[Fig. 3] : an overall view showing a directly blow-formed bottle as one the most preferable embodiment of a container body of the package of the present invention.

### Mode for Carrying Out the Invention:

### <Structure and function of package>

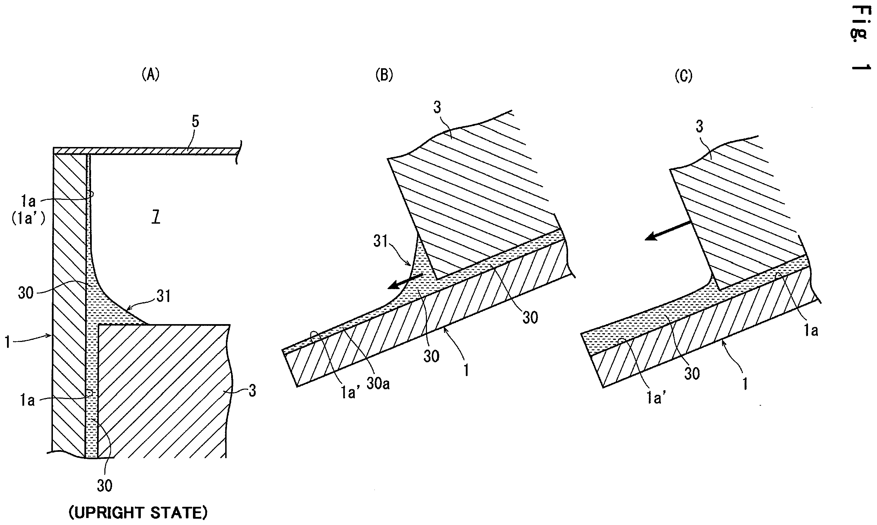

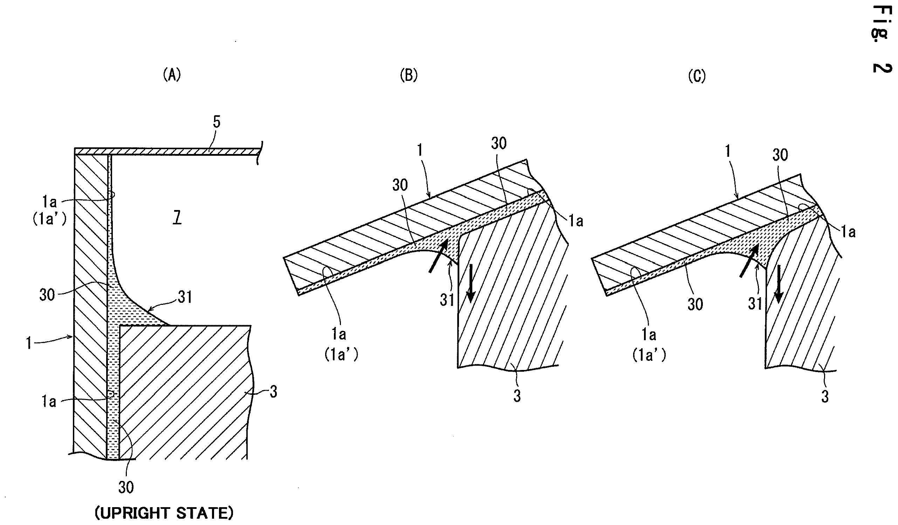

The package of the present invention as shown in Figs. 1 and 2 comprises a container body 1 containing a fluid 3. In particular, as shown in Figs. 1(A) and 2(A), the container body 1 in an upright state is sealed at the upper end with a sealing foil 5, and appropriately closed with a lid (not shown) . A head space 7 is formed between the upper end face of the fluid 3 and the upper end of the container body 1 (sealing foil 5).

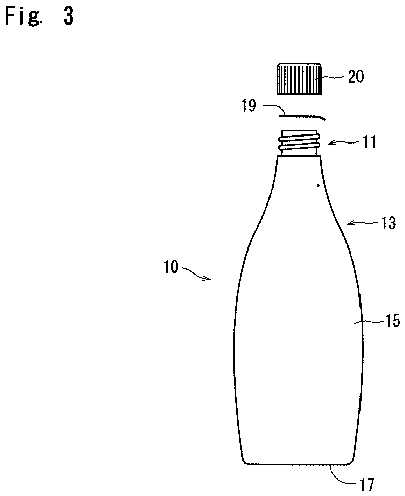

A preferable example of the container body 1 is a directly blow-formed bottle, which is shown in Fig. 3.

The directly blow-formed bottle (corresponding to the container body 1 in Figs. 1 and 2) denoted as 10 as a whole in Fig. 3 has a screwed neck portion 11, a body portion wall 15 linked to the neck portion 11 through a shoulder portion 13, and a bottom wall 17 that closes the lower end of the body portion wall 15. An opening at the upper end of the bottle is closed with a sealing member 19 such as an aluminum foil (corresponding to the sealing foil 5 in Fig. 1) after filling with the aforementioned fluid 3 (not shown in Fig. 3), and further screw-equipped with a cap 20 to ensure its sealing property.

The bottle 10 is used preferably for containing a viscous fluid. The viscous substance contained in the bottle may be discharged by squeezing the bottle at the body portion wall 15.

An inner surface 1a of the container body 1 (for instance, a directly blown bottle 10 in Fig. 3) shown in Figs. 1 and 2 can be a roughened surface or a flat smooth surface. In Figs. 1 and 2, the surface is indicated as a flat smooth surface. The flat smooth surface 1a is coated with a lubricating liquid 30 to improve the slipping property to the fluid 3, and the lubricating liquid 30 is interposed between the fluid 3 and the inner surface 1a of the container body 1.

In the present invention, the lubricating liquid 30 and the fluid 3 are selected so that the contact angle of the lubricating liquid 30 to the inner surface 1a is smaller than the contact angle of the fluid 3 to the inner surface 1a.

In the aforementioned package of the present invention having a basic structure as described above, a liquid pool 31 of the lubricating liquid 30 is formed at the periphery of the upper end face of the fluid 3 in the container body 1 in an upright state, as shown in Figs. 1(A) and 2(A). Namely, in the upright state, the lubricating liquid 30 that coats the inner surface 1a in the area to correspond to the head space 7 located above the fluid 3 may flow down to form the liquid pool 31 of the lubricating liquid 30. For this reason, the thickness of the lubricating liquid 30 is decreased on the inner surface 1a' in the area corresponding to the head space 7 in comparison with the thickness of the lubricating liquid 30 in the area interposed between the fluid 3 and the inner surface 1a of the container body.

In the present invention, the thus formed liquid pool 31 serves to stably exhibit an excellent slipping property in the discharge of the fluid 3.

For instance, in discharging the fluid 3, a sealing foil 5 is peeled off, and then, the container body 1 is tilted as shown in Fig. 1(B), so that the lubricating liquid 30 forming the liquid pool 31 flows down on the inner surface 1a (1a') in the area corresponding to the head space 7 and reaches the upper end part of the container body 1. The fluid 3 is discharged in this state. At this time, the lubricating liquid 30 that forms the liquid pool 31 flows down to increase the thickness of the film on the inner surface 1a' of the area corresponding to the head space 7, as shown in Fig. 1(C). The fluid 3 may be discharged together with the lubricating liquid 30 while keeping in contact with the thickened film 30a of the lubricating liquid 30, or may slide on the thickened film 30a of the lubricating liquid 30, whereby the container inner surface can stably exhibit an excellent slipping property to the fluid 3.

After discharging a predetermined amount of the fluid 3, the container body 1 is returned to its upright state. In this state, since the lubricating liquid 30 is subjected to a smaller flow resistance, it rapidly flows down inside the container body 1, and the remaining fluid 3 may rapidly fall inward the container body 1 together with the lubricating liquid 30.

After the discharge of the fluid 3, the container body 1 is still held in an upright state. The lubricating liquid 30 that coats the inner surface of the area corresponding to the head space 7 falls little by little over time, thereby reconstituting the liquid pool 31 on the upper end face periphery of the fluid 3 as shown in Fig. 1(A). As a result, the fluid 3 can be discharged next time as rapidly as the initial discharge.

In the package of the present invention, the contact angle of the lubricating liquid 30 to the inner surface 1a as an underlying layer of the container body 1 is smaller than the contact angle of the fluid to the inner surface 1a, namely, the flow resistance of the lubricating liquid 30 is extremely small. As a result, the fluid 3 contained in the container body 1 may be discharged rapidly from the container body 1 together with the lubricating liquid 30. Even if the fluid 3 is a viscous substance, it may be discharged from the container body 1 without remaining therein.

On the other hand, at the interface where the fluid 3 is peeled off from the container body 1 (i.e., the upper area of the inner surface 1a of the container body 1) at the time of tilting the container body 1 to discharge the fluid 3, gravity works first in the direction in which the fluid 3 leaves the container body 1 as shown in Fig. 2(B). At this time, the tilting applies a force to the liquid pool 31 to flow on the inner surface 1a down to the upper end part of the container body 1, while the liquid pool 31 gradually flows onto the inner surface 1a to fill the gap formed by the move of the fluid 3. As a result, the lubricating liquid 30 enters the gap between the fluid 3 and the container body 1, and thus, the fluid 3 and the container body 1 are easily separated from each other as shown in Fig. 2(C). When the liquid pool 31 is small or there is no liquid pool, the liquid cannot flow into the gap between the fluid 3 and the container body 1 as mentioned above, and this may degrade considerably the peeling property.

As mentioned above with reference to Figs. 1 and 2, formation of a liquid pool of the lubricating liquid improves both the slipping property and peeling property, thereby enabling stable and smooth discharge.

### <Container body 1>

In the present invention, the container body 1 has an inner surface 1a as a flat smooth surface. Alternatively, the inner surface can be roughened as long as the aforementioned behavior is not hindered.

The materials to form the inner surface 1a of the container body 1 are not limited in particular, and they can be selected from thermoplastic resins, thermosetting resins, glass and metals, depending on the use and the contents. The inner surface is preferably formed of a thermoplastic resin from the viewpoint of reducing excessive consumption of the lubricating liquid 30.

The thermoplastic resins are not limited in particular as long as they can be formed into container shapes. Usually, it is preferably selected from olefin resins such as low-density polyethylene, linear low-density polyethylene, medium- or high-density polyethylene, polypropylene, poly(1-butene), and poly(4-methyl-1-pentene), copolymer resins of these olefins; and polyester resins such as polyethylene terephthalate, polyethylene naphthalate, and polyethylene terephthalate/isophthalate. These are preferably used also for forming an outer surface of the container.

In a case of using this container body 1 as a directly blow-formed bottle as shown in Fig. 3, olefin resins as represented by the low-density polyethylene and the linear low-density polyethylene are used preferably since they are suitable for squeezing out the contents.

The inner surface 1a of the container body 1 to be formed of the thermoplastic resin is not necessarily roughened. For this reason, there is no necessity of blending the thermoplastic resin with an inorganic material or the like that serves as a roughening agent. Alternatively, this inner surface 1a can comprise both a roughened surface and a flat smooth surface.

It is necessary to make the fluid start moving at the time of tilting the container and discharging the content. For this purpose, the surface to exhibit the slipping property can be roughened while the surface to exhibit the peeling property can be smoothened. In other words, the lower surface can be a roughened surface while the surface opposite to the lower surface can be a flat smooth surface.

For making the roughened surface, any inorganic materials such as silica to serve as a roughening agent may be blended in the resin of the inner surface. The fine particles to be blended as the aforementioned roughening agent are not limited in particular as long as their average particle diameter is within the aforementioned range. Representative examples thereof include: particles of metal oxides such as titanium oxide, alumina, and silica; particles of carbonates such as calcium carbonate; particles based on carbon such as carbon black; and organic fine particles formed of polymethyl(meth)acrylate, polyethylene, and silicone as represented by polyorganosilsesquioxane. These particles may be subjected to hydrophobic treatment with a silane coupling agent, a silicone oil or the like. In the present invention, the process can be performed also by extrusion such as direct blow forming as long as the particle diameter can be kept after melt forming. Examples of materials preferably used for this purpose include fine particles subjected to hydrophobic treatment, particularly particles of hydrophobic silica, cured polymethyl methacrylate, ultra-high molecular weight polyethylene, polyorganosilsesquioxane, and silicone.

Further in the present invention, the container body 1 may have a single layer structure of the aforementioned thermoplastic resin or a multi-layered structure of a resin mixed with the aforementioned surface roughening agent.

For instance, a gas barrier resin layer can be formed as an intermediate layer between the inner surface layer and the outer surface layer of the container body 1, thereby preventing the content from deterioration caused by permeation of a gas such as oxygen.

Examples of the above-mentioned gas barrier resin include ethylene-vinyl alcohol copolymer (saponified ethylene-vinyl acetate copolymer), aromatic polyamide and cyclic polyolefin. Among them, the ethylene-vinyl alcohol copolymer is the most preferred since it exhibits particularly excellent oxygen

### barrier property.

As the above-mentioned ethylene-vinyl alcohol copolymer, a saponified copolymer is preferred, which is obtained by saponifying an ethylene-vinyl acetate copolymer having an ethylene content of 20 to 60 mol%, particularly 25 to 50 mol% so that the saponification degree reaches 96 mol% or more and particularly 99 mol% or more.

The aforementioned gas barrier resins each can be used by itself or in blends of two or more different types thereof. For improving adhesion to the inner surface layer or the outer surface layer, polyolefins such as polyethylene may be blended in the gas barrier resin in a range not degrading the gas barrier property.

In a case of providing the gas barrier layer as the intermediate layer, it is preferable to provide an adhesive resin layer between the inner surface layer and the gas barrier layer and between the outer surface layer and the gas barrier layer in order to improve the adhesion between the inner surface layer or the outer surface layer, thereby preventing delamination.

Adhesive resins that can be used for forming the adhesive layer are known per se, and for instance, they are resins containing a carbonyl group (>C=O) in the main chain or the side chain, in an amount of 1 to 100 meq/100g, in particular, 10 to 100 meq/100g. Specific examples of such resins to be used as adhesive resins include: an olefin resin graft-modified with a carboxylic acid such as maleic acid, itaconic acid or fumaric acid or an anhydride thereof, or with an amide or an ester; an ethylene-acrylic acid copolymer; an ionically crosslinked olefin copolymer; and an ethylene-vinyl acetate copolymer.

Furthermore, the multi-layered structure may have a reproduced layer obtained from a virgin resin which is used for forming the inner layer or the outer layer and which is mixed with a scrap resin such as burrs generated during formation of this container body 1.

The respective layers are set to have thickness known per se so that the properties required for the layers are to be exhibited. Moreover, additives such as an antioxidant, a surfactant and a colorant can be added to the resins for forming the respective layers as appropriate without impairing the properties of the respective layers.

The shape of the container body 1 is not limited in particular as long as the liquid pool 31 can be formed by coating the inner surface 1a with the lubricating liquid 30, and the container body 1 may have a shape of a bottle or a cup.

The container body 1 may be produced by forming a preform through extrusion-forming of a resin for forming the aforementioned respective layers and then forming the preform into the predetermined container shape by post-processes such as blow-forming, a plug-assisted forming, and vacuum forming.

Particularly in the present invention, it is the most preferable that this container body 1 has a shape of a directly blow-formed bottle suitable for discharging the viscous fluid as shown in Fig. 3. The directly blow-formed bottle may be produced by forming a tube-like preform by extrusion-forming, pinching off to close the preform at one end, and blowing a fluid such as air into this preform to shape it as a bottle.

### <Lubricating liquid 30 and fluid 3>

In the package of the present invention, comprising the container body 1 containing the aforementioned fluid 3, the thus formed inner surface 1a of the container body 1 is coated with the lubricating liquid 30, and then, the container body 1 is filled with the fluid 3 so as to form the head space 7.

The lubricating liquid 30 having an appropriate surface property is selected corresponding to the type of the fluid 3 to be contained in the container body 1. Therefore, the lubricating liquid 30 is required to be immiscible with the fluid 3. Here, a liquid being immiscible with the fluid 3 means that the liquid may not be dispersed instantly even when it gets into contact with the fluid 3 but may remain as the lubricating liquid 30. Further, the lubricating liquid 30 is required to be a non-volatile liquid having a small vapor pressure under an atmospheric pressure, for instance, a liquid having a high boiling point of not lower than 200°C. If a volatile liquid was used for the lubricating liquid 30, the liquid would easily be evaporated and lost over time, and thereby making it difficult to improve the slipping property to the fluid 3.

Various specific examples can be listed for the lubricating liquid 30, as long as they are the aforementioned liquids having high boiling points and their contact angles to the inner surface 1a are smaller than the contact angle of the fluid 3 to the inner surface 1a. In particular, a lubricating liquid 30 having a surface tension considerably different from that of the fluid 3 which slips over the liquid is preferred in the present invention, since the lubricating effect may be greater.

For instance, when the fluid 3 is water or a hydrophilic substance containing water, a liquid having a surface tension in a range of 10 to 40 mN/m, in particular in a range of 16 to 35 mN/m, is preferably used as the lubricating liquid 30. Representative examples thereof include fluorine-based liquids, fluorosurfactants, silicone oil, fatty acid triglyceride, and various vegetable oils. Preferable examples of the vegetable oils include soybean oil, rapeseed oil, olive oil, rice oil, corn oil, safflower oil, sesame oil, palm oil, castor oil, avocado oil, coconut oil, almond oil, walnut oil, hazel oil, and salad oil. These liquids may be blended in use.

Further, the lubricating liquid selected from the aforementioned examples preferably has a high wettability with the inner surface 1a (i.e., the contact angle to the inner surface 1a is small) . The lubricating liquid that constitutes the liquid pool 31 may be different from the lubricating liquid that coats the inner surface 1a.

In the present invention, the contact angle refers to the angle at which a liquid surface meets a solid surface on the interface where three phases of a solid inner surface, a liquid and a gas are in contact with each other.

In the present invention, it is important that a certain amount of excessive lubricating liquid 30 is contained in order to form a coating layer of the lubricating liquid 30 on the inner surface 1a and to form the liquid pool 31. The excessive lubricating liquid may be added before or after filling with the fluid. Examples of the addition method include spraying, simultaneously extruding with the melting resin, simultaneously injecting with the contents, and bleeding by internal addition. In a case where the lubricating liquid to coat the inner surface 1a of the container body 1 and the lubricating liquid to form the liquid pool 31 are different from each other, the lubricating liquid to form the liquid pool 31 may be provided later as an excess.

In brief, in the present invention, the lubricating liquid 30 is used to coat the inner surface 1a of the container body 1. Specifically, the coating is provided by applying an excessive amount of lubricating liquid 30 onto the inner surface 1a of the container body 1 so that the liquid pool 31 is formed at the periphery of the fluid 3 facing the head space 7 at the time of filling the container with the fluid 3 (see Fig. 1(A)).

More specifically, the inner surface 1a' is entirely coated in advance with the excessive amount of lubricating liquid 30 or, alternatively, the excessive lubricating liquid is fed after filling the container with the fluid. As a result, when the container body 1 filled with the fluid 3 is held in an upright state as shown in Fig. 1(A), the lubricating liquid 30 will drip from the inner surface 1a (1a') in the area corresponding to the head space 7.

For this purpose, it may be necessary to spray this lubricating liquid 30 on the entire inner surface of the container body 1. For instance, the application amount may preferably be 0.1 g/m² or more, or in a range of about 0.1 to about 10 g/m² in average, including the excess. By setting the application amount in this manner, the flat smooth surface 1a will be coated completely with the lubricating liquid 30.

Therefore, the inner surface 1a may be roughened as long as the liquid pool 31 is formed.

The lubricating liquid 30 can be sprayed while the container body 1 is held in an upright state or inverted as long as the inner surface 1a can be coated entirely with the excessive amount of lubricating liquid 30.

After applying the lubricating liquid 30 as mentioned above, the fluid 3 is fed from a predetermined feeding pipe into the interior of the container body 1 that is held in an upright state with its inner surface being coated entirely with the excessive amount of lubricating liquid 30, so that the head space 7 is left unfilled (in some cases, the excessive lubricating liquid may be provided after filling the container with the fluid 3).

In other words, when the fluid 3 is fed as mentioned above, the lubricating liquid 30 that coats the inner surface 1a (1a') in the area corresponding to the head space 7 may drip, so that the liquid pool 31 can be formed at the periphery of the upper end face of the fluid 3. As a result, as shown in Fig. 1(A), the thickness of the lubricating liquid 30 is decreased in the area above the liquid pool 31 in comparison with the thickness of the lubricating liquid 30 interposed between the side surface of the fluid 3 and the flat smooth surface 1a, as described above .

The fluid 3 used for the filling has a surface tension considerably different from that of the lubricating liquid 30 (i.e. , its contact angle to the inner surface 1a is larger than that of the lubricating liquid 30). Specifically, the fluid 3 may be a viscous fluid having a viscosity of not less than 100 mPa•s at 25°C. Specific examples thereof include ketchup, aqueous paste, honey, various sauces, mayonnaise, mustard, dressing, jam, chocolate syrup, cosmetic liquids such as milky lotion, liquid detergent, shampoo, and rinse. That is, a suitable lubricating liquid 30 is used corresponding to the type of the fluid 3 to form the liquid pool 31, so that the viscous fluid 3 can be rapidly discharged by tilting or inverting the container.

Preferred examples of the fluid 3 include hydrophilic substances that contain water, such as ketchup, various sauces, honey, mayonnaise, mustard, jam, chocolate syrup, milky lotion and the like.

The lubricating liquid 30 is preferably selected from oily liquids that have been approved as food additives, such as silicone oil, glycerin fatty acid ester, and edible oil.

After filling the container with the fluid 3 such that the head space 7 is formed and also forming the liquid pool 31 of the lubricating liquid 30 as mentioned above, the sealing foil 5 is attached by heat sealing and the lid is suitably attached to provide the package of the present invention.

### Examples:

The present invention will be described below by referring to Examples.

The method of measurements conducted in Examples below for measuring respective characteristics and physical properties, and the container bodies (bottles) are as mentioned below.

### <Container body>

A multi-layered directly blow-formed bottle having the following layer constitution and capacity of 500 mL was formed by a known method and used in experiments below.

### Bottle A: directly blow-formed multi-layered bottle having 9 layers of 5 types

Layer constitution: inner layer / adhesive layer / liquid diffusion prevention layer / adhesive layer / main layer / adhesive layer / oxygen barrier layer / adhesive layer / outer layer
Inner layer: low-density polyethylene
Adhesive layer: acid-modified polyethylene
Liquid diffusion prevention layer: ethylene-vinyl alcohol copolymer (EVOH)
Main layer: low-density polyethylene (LDPE)
Oxygen barrier layer: ethylene-vinyl alcohol copolymer (EVOH)
Outer layer: low-density polyethylene (LDPE)

### Bottle B: directly blow-formed multi-layered bottle having 9 layers of 5 types

Layer constitution: inner layer / adhesive layer / liquid diffusion prevention layer / adhesive layer / main layer / adhesive layer / oxygen barrier layer / adhesive layer / outer layer
Inner layer: polyethylene blended with 5% by weight of silica 5 µm in average particle diameter
Adhesive layer: acid-modified polyethylene
Liquid diffusion prevention layer: ethylene-vinyl alcohol copolymer (EVOH)
Main layer: low-density polyethylene (LDPE)
Oxygen barrier layer: ethylene-vinyl alcohol copolymer (EVOH)
Outer layer: low-density polyethylene (LDPE)

### <Lubricating liquid>

### Medium chain fatty acid triglyceride (MCT)

Surface tension: 28.8 mN/m (23°C)
Viscosity: 33.8 mPa•s (23°C)
Boiling point: 210°C or higher
Flash point: 242°C (reference value)

The surface tension of the liquid was measured at 23°C using a solid-liquid interface analysis system DropMaster 700 (manufactured by Kyowa Interface Science Co., Ltd.). The density of the liquid required for the surface tension measurement was measured at 23°C using a density/specific gravity meter DA-130 (manufactured by Kyoto Electronics Manufacturing Co., Ltd.) . Further, the viscosity of the liquid was measured at 23°C using a tuning-fork vibration viscometer SV-10 (manufactured by A&D Company Limited).

### <Fluid>

Mayonnaise-type viscous food

Viscosity:
499 Pa•s (0.1 sec⁻¹)
94 Pa•s (1 sec⁻¹)
0.30 Pa•s (1000 sec⁻¹)

For the viscosity measurement, a rheometer (ARES manufactured by TA Instruments) was used. The values measured by the steady flow method at the geometry of the parallel plate with a gap 0.5 mm were indicated.

### <Formation of liquid pool of lubricating liquid>

The bottle was filled with 200 g of the fluid, and several drops of the lubricating liquid (MCT) was applied to the periphery of the upper end face of the fluid so as to form a liquid pool. Further, the lubricating liquid (MCT) was dripped only a part of the periphery (about one-fourth area of the periphery) to form a liquid pool for the purpose of a peeling property test as described later.

### <Test of slipping property to fluid>

After forming a liquid pool of the lubricating liquid, the slipping property to the content was evaluated. Specifically, a bottle in an upright state at room temperature (25°C) was tilted by about 45° so as to evaluate the slipping property to the content based on the time required for the content to completely slide down toward the mouth portion of the bottle. The criteria for evaluation are as follows.
○: time for sliding down completely is less than 5 minutes
Δ: time for sliding down completely is 5 minutes or more and less than 10 minutes
×: time for sliding down completely is 10 minutes or more

### <Test of peeling property to fluid>

A bottle provided partially with a liquid pool by the aforementioned method was used. In room temperature (25°C), the bottle in an upright state was tilted by about 45° so that the liquid pool was positioned above, thereby to evaluate the peeling property to the contents. The evaluation criteria are as follows.
○: peeling instantly
×: no peeling, or peeling in 10 minutes or more

### <Experimental example 1>

The bottle A (directly blow-formed multi-layered bottle having 9 layers of 5 types) was prepared as the container body.

To the inner surface of the bottle A, medium chain fatty acid triglyceride as a lubricating liquid of the amount shown in Table 1 was applied by an air-spray method using an air brush. The bottle having the inner surface coated with the lubricating liquid was used to form the liquid pool of the aforementioned lubricating liquid and to conduct the tests for the slipping property to the fluid and the peeling property to the fluid. The results are shown in Table 1. Here, the contact angle of the lubricating liquid to the low-density polyethylene surface is smaller than that of the fluid to the low-density polyethylene surface.

### <Experimental example 2>

The slipping property and peeling property to the fluid were tested similarly to Experimental example 1 except that the liquid pool of the lubricating liquid was not formed. The results are shown in Table 1.

### <Experimental example 3>

The bottle B (directly blow-formed multi-layered bottle having 9 layers of 5 types) was prepared as the container body, through a process similar to that of Experimental example 1, except that a low-density polyethylene blended with 5% by weight of silica 5 µm in average particle diameter was used as the resin for the inner layer.

This bottle was evaluated as described above, and the results are shown in Table 1.

### <Experimental example 4>

The slipping property and peeling property to the fluid were tested similarly to Experimental example 1 except that the inner surface of the bottle A was coated with the lubricating liquid and the liquid pool of the lubricating liquid was not formed. The results are shown in Table 1.

**[Table 1]**

| | Bottle | Coating amount of lubricating liquid (g/m²) | Formation of liquid pool of lubricating liquid | Slipping property | Peeling property |
|---|---|---|---|---|---|
| Exptl. Ex. 1 | Bottle A | 3 | Yes | ○ | ○ |
| Exptl. Ex. 2 | Bottle A | 3 | No | Δ | × |
| Exptl. Ex. 3 | Bottle B | 3 | Yes | ○ | ○ |
| Exptl. Ex. 4 | Bottle A | - | No | × | × |

| | | | | | |
|---|---|---|---|---|---|
| * Exptl. Ex.: Experimental example | | | | | |

The inner surfaces of the bottles in Experimental examples 1-3 were coated with the lubricating liquid. Both the slipping property and peeling property were favorable in Experimental examples 1 and 3 where the liquid pools of the lubricating liquid were formed, while the same properties were inferior in Experimental example 2 where no liquid pool was formed.

Both the slipping property and the peeling property were poor in Experimental example 4 where neither a coating of the lubricating liquid nor a liquid pool was formed.

The results demonstrate that the coating with the lubricating liquid and forming a liquid pool serve to improve both the slipping property and the peeling property, and the synergy of these properties facilitates discharge of the contents.

### Description of Reference Numerals:

- 1:: container body
- 1a:: inner surface of container body 1
- 3:: fluid
- 5:: sealing foil
- 7:: head space
- 30:: lubricating liquid
- 31:: liquid pool

## Claims

1. A package including a container body containing a fluid with leaving a head space, wherein
the container body has an inner surface coated with a lubricating liquid immiscible with the fluid, and the lubricating liquid is present as a coating layer interposed between the inner surface and the fluid,
the lubricating liquid for forming the coating layer forms a liquid pool at a periphery of an upper end face of the fluid contained in the container body in a state of being held upright, and
a contact angle of the lubricating liquid to the inner surface is smaller than the contact angle of the fluid to the inner surface.

2. The package according to claim 1, wherein the fluid is a viscous substance having a viscosity of not less than 100 mPa•s at 25°C.
